# EUROPÄISCHE PATENTSCHRIFT

(11) **EP 3 094 815 B1**
(45) Veröffentlichungstag und Bekanntmachung des Hinweises auf die Patenterteilung: **27.06.2018**
(21) Anmeldenummer: 15711667.4
(22) Anmeldetag: 02.03.2015
(51) Int. Cl.: E21B 43/16, F23G 7/06, F23J 15/00

(54) **VORRICHTUNG UND VERFAHREN ZUR NUTZUNG VON BEI EINER VERBRENNUNG ENTSTEHENDEM KOHLENDIOXID**
DEVICE AND METHOD FOR USING CARBON DIOXIDE ORIGINATING FROM A COMBUSTION PROCESS
DISPOSITIF ET PROCÉDÉ SERVANT À UTILISER DU DIOXYDE DE CARBONE SE FORMANT LORS D'UNE COMBUSTION

(30) Priorität: 13.03.2014 DE 102014204646
(43) Veröffentlichungstag der Anmeldung: 23.11.2016
(73) Patentinhaber: Siemens Aktiengesellschaft, 80333 München (DE)
(72) Erfinder: ROST, Mike, 90559 Burgthann (DE); SCHNEIDER, Rüdiger, 65817 Eppstein (DE); SCHRAMM, Henning, 65719 Hofheim am Taunus (DE); VORTMEYER, Nicolas, 91054 Erlangen (DE); ZIMMERMANN, Gerhard, 91315 Höchstadt/Aisch (DE)
(86) Internationale Anmeldenummer: PCT/EP2015/054249
(87) Internationale Veröffentlichungsnummer: WO 2015/135778

(56) Entgegenhaltungen:
- EP-A1- 2 706 211
- US-A- 4 344 486
- US-A1- 2013 025 276

## Beschreibung

Die Erfindung betrifft eine Vorrichtung zur Nutzung von bei der Verbrennung eines insbesondere gasförmigen Nebenproduktes entstehendem Kohlendioxid, insbesondere im Rahmen der Gewinnung eines fossilen Brennstoffes. Weiterhin betrifft die Erfindung ein Verfahren zur Nutzung von bei der Verbrennung eines insbesondere gasförmigen Nebenproduktes entstehendem Kohlendioxid.

Die in der Erde lagernden Vorräte an fossilen Brennstoffen, wie beispielsweise Erdgas oder insbesondere Erdöl, die mit heutiger Technik wirtschaftlich gewinnbar sind, dienen als Energiereserven, um den stetig wachsenden Energieverbrauch der heutigen Zeit zu decken. Erdöl wird hierbei als einer der wichtigsten Rohstoffe zur Erzeugung von Elektrizität, als Treibstoff für Verkehrs- und Transportmittel, sowie als Ausgangsstoff für zahlreiche Produkte der chemischen Industrie eingesetzt.

Zur Erdölgewinnung wird dieses aus den unterirdischen Lagerstätten gefördert. Hierbei werden grundsätzlich drei Förderphasen unterschieden. Als Primärförderung wird die Förderphase bezeichnet, in der die Brennstoffförderung durch den natürlich vorhandenen Überdruck des Erdöls, dem sogenannten Lagerstättendruck, erfolgt.

Sinkt im Laufe der primären Erdölförderung der Lagerstättendruck, kann im Rahmen der zweiten Förderphase, der Sekundärförderung, Wasser oder Inertgas mittels durch Bohrungen eingerichteter Einpresssonden eingepresst und der Lagerstättendruck so wieder erhöht werden. Auf diese Weise können bis zu 40% des insgesamt vorhandenen Erdöls gefördert werden.

Das restliche, zunehmend zähe und dichte bitumenartige Erdöl erschwert jedoch dessen weitere Förderung. In diesem Fall wird auf die tertiäre Ölförderung (Enhanced Oil Recovery, EOR) zurückgegriffen. Für die tertiäre Erdölforderung werden große Mengen Kohlendioxid (CO₂) benötigt, die unter hohem Druck in die Lagerstätten bzw. die Erdölreservoirs gepresst werden. Das eingepresste Kohlendioxid löst sich im Erdöl, quellt dieses auf und verringert so dessen Viskosität, so dass das Erdöl leichter in Richtung der Förderstelle bzw. der Förderbohrung fließen kann, schließlich unter Zuhilfenahme von Pumpen gefördert wird.

Als mögliche Quellen für das zur Förderung benötigte Kohlendioxid stehen beispielsweise natürliche Reservoirs, Abgase aus Industrieprozessen oder Kraftwerksabgase zur Verfügung. Da das aus diesen Quellen nutzbare Kohlendioxid jedoch üblicherweise nicht in der zur Erdölförderung benötigten Konzentration vorliegt, ist eine entsprechende Aufkonzentrierung notwendig. Hierzu stehen bekannte Verfahren, wie physikalische oder chemische Absorption, Adsorption oder die Abtrennung mittels selektiver Membranen zur Verfügung, die jedoch mit einem hohen betrieblichen Aufwand verbunden sind.

Weiterhin ist es möglich, Kohlendioxid aus fossilen Brennstoffen mittels des Oxyfuel-Verfahrens zu gewinnen. Hierbei wird ein Brennstoff mit reinem Sauerstoff verbrannt, wobei ein Abgas entsteht, dessen Hauptbestandteile im Wesentlichen Kohlendioxid und Wasserdampf sind. Das Kohlendioxid kann dann durch Kondensation des Wasserdampfes aufkonzentriert werden. Für die Nutzung in der tertiären Erdölförderung ist das Oxyfuel-Verfahren jedoch möglicherweise nicht wirtschaftlich einsetzbar.

Zusätzlich ist zu berücksichtigen, dass auch bei einer ausreichend hohen Konzentration und der geforderten Reinheit des Kohlendioxids diejenigen Orte, an denen CO₂-reiche Abgase oder andere CO₂-Quellen zugänglich sind, gewöhnlich räumlich weit von den Förderstellen für die Erdölgewinnung entfernt sind. Die Anlieferung von Kohlendioxid zu den entsprechenden Förderstellen ist somit mit entsprechendem Zusatzaufwand und hohen Kosten verbunden.

Eine Vorrichtung gemäß dem Oberbegriff des Anspruchs 1 ist aus EP2706211 bekannt. Ein Verfahren gemäß dem Oberbegriff des Anspruchs 12 ist ebenfalls aus EP2706211 bekannt.

Der Erfindung liegt es als eine erste Aufgabe zugrunde, eine Vorrichtung anzugeben, die mit möglichst niedrigen Betriebs- und Investitionskosten die Gewinnung von wirtschaftlich nutzbarem Kohlendioxid ermöglicht.

Als eine zweite Aufgabe liegt der Erfindung zugrunde, ein Verfahren anzugeben, das sich die Vorteile der Vorrichtung zunutze macht und so eine entsprechende Bereitstellung des benötigten Kohlendioxids erlaubt.

Die erste Aufgabe der Erfindung wird erfindungsgemäß gelöst durch eine Vorrichtung gemäß Anspruch 1. In einem ersten Schritt geht die Erfindung von der Tatsache aus, dass im Rahmen der Erdölförderung gemeinsam mit dem geförderten Erdöl immer auch Nebenprodukte, insbesondere gasförmige Brenngase, aus einer Förderbohrung austreten. Da jedoch die Kosten für den Transport dieser insbesondere gasförmigen Nebenprodukte und/oder deren Aufbereitung üblicherweise den zu erwartenden Verkaufserlös übersteigen, wird die Nutzung der Nebenprodukte, insbesondere der Brenngase, oder deren Aufarbeitung zumeist allein aus wirtschaftlichen Gründen unterlassen. Stattdessen werden die bei der Erdölförderung anfallenden Nebenprodukte in Ermangelung politischer Vorgaben üblicherweise ungenutzt abgefackelt und die resultierenden Schadstoffemissionen, wie insbesondere Kohlendioxidemissionen in die Atmosphäre in Kauf genommen.

In einem zweiten Schritt berücksichtigt die Erfindung, dass die der Schadstoffminimierung und insbesondere der Kohlendioxid-Abscheidung zugrundeliegenden Prozesse in anderen Gebieten bereits Teil intensiver Forschung sind. So werden insbesondere bei fossilbefeuerten Kraftwerksanlagen zur Erzeugung elektrischer Energie immer häufiger Abscheidevorrichtungen eingesetzt, die eine gezielte Abtrennung von in Abgasen enthaltenen Schadstoffen und Kohlendioxid ermöglichen und so die atmosphärischen Belastungen deutlich verringern (Post-Combustion-Capture-Prozess).

In einem dritten Schritt erkennt die Erfindung, dass sich eine solche bereits in Kraftwerksanlagen erprobte Abscheidevorrichtung auch für den Einsatz bei der Erdölförderung eignet. Durch die Kombination mit einer geeigneten Aufbereitungseinheit können bei der Erdölförderung anfallende und bislang ungenutzte Nebenprodukte gezielt genutzt werden. Mit anderen Worten erlaubt die Vorrichtung insbesondere eine Vor-Ort-Produktion und Nutzung von Kohlendioxid an der Förderstelle des Erdöls.

Die Aufbereitungseinheit, die mit der Förderstelle verbunden werden kann, dient hierbei zunächst der Erzeugung eines kohlendioxidhaltigen Abgases durch die Verbrennung der Nebenprodukte. In der Abscheidevorrichtung, die der Aufbereitungseinheit über eine Abgasleitung strömungstechnisch angeschlossen ist, kann das Kohlendioxid aus dem Abgas abtrennt werden und zur anschließenden Erdölförderung der Förderstelle zugeführt werden. Die Zufuhr erfolgt hierbei über die Zuführleitung, die die strömungstechnische Verbindung zwischen der Abscheidevorrichtung und der Förderstelle darstellt.

Insgesamt kann durch den Einsatz einer solchen Vorrichtung die Wirtschaftlichkeit des Erdölförderprozesses deutlich verbessert werden. Da das aus dem Verbrennungsabgas abgetrennte Kohlendioxid im Idealfall unmittelbar am Einsatzort produziert und zur Erdölförderung genutzt wird, entfallen Kosten zur Bereitstellung und zum Transport von Kohlendioxid. Zusätzlich lassen sich durch die gezielte Aufbereitung des bislang technisch nicht verwertbaren Abgases aus der Verbrennung der bei der Erdölförderung anfallenden Nebenprodukten unerwünschte Emissionen von Kohlendioxid in die Atmosphäre verhindern oder zumindest deutlich verringern. Die Förderstelle kann hierbei je nach Förderbetrieb eine oder mehrere Förderbohrungen und entsprechende Einpressbohrungen aufweisen.

Vorzugsweise ist dem Brenner der Aufbereitungseinheit eine Brennstoffzufuhrleitung zur Zufuhr der Nebenprodukte angeschlossen. So kann ein aus der Förderstelle, bzw. aus einer entsprechenden Förderbohrung der Förderstelle ausströmendes Brenngas dem Brenner zugeführt und dort unter Bildung eines kohlendioxidhaltigen Abgases verbrannt werden.

Die Verbrennung erfolgt hierbei vorzugsweise atmosphärisch unter Luftzufuhr, wozu dem Brenner der Aufbereitungseinheit zweckmäßigerweise eine Luftzufuhrleitung zur Zufuhr von Verbrennungsluft angeschlossen ist. Insbesondere kann in die Luftzufuhrleitung noch ein Gasmischer geschaltet sein, welcher der Einstellung der Konzentration des Kohlendioxids im Verbrennungsabgas dient.

Grundsätzlich sind zur Abtrennung des Kohlendioxids aus dem Abgas all solche Verfahren einsetzbar, die eine ausreichend hohe Selektivität und einen niedrigen Energiebedarf haben. So wären prinzipiell Absorptions- und Adsorptionsprozesse oder auch der Einsatz von Membranen denkbar.

Besonders bevorzugt erfolgt die Abtrennung des Kohlendioxids nasschemisch. Hierzu umfasst die Abscheidevorrichtung vorzugsweise einen Absorber zur Abtrennung des Kohlendioxids aus dem Abgas mittels eines Waschmediums, sowie einen strömungstechnisch mit dem Absorber verbundenen Desorber zur Freisetzung des Kohlendioxids aus dem Waschmedium. In dem Absorber wird das Kohlendioxid aus dem Abgas durch Absorption im Waschmedium entfernt. Um das absorbierte Kohlendioxid aus dem Waschmedium zu entfernen und so Kohlendioxid zu gewinnen, wird das beladene Waschmedium dem Desorber zugeführt. Hierzu ist der Absorber zweckmäßigerweise über eine Abführleitung strömungstechnisch mit einer Zuführleitung des Desorbers verbunden. In dem Desorber wird das absorbierte Kohlendioxid durch thermische Desorption aus dem Waschmedium freigesetzt und das regenerierte Waschmedium zur erneuten Absorption von Kohlendioxid wieder dem Absorber zugeführt. Hierzu ist der Desorber vorzugsweise über eine Abführleitung strömungstechnisch mit einer Zuführleitung des Absorbers verbunden.

Das desorbierte Kohlendioxid kann nach dessen Abtrennung zur Erdölförderung eingesetzt werden. Hierzu ist der Desorber der Abscheidevorrichtung besonders vorteilhaft über die Zuführleitung für Kohlendioxid strömungstechnisch mit der Förderstelle verbunden. So kann das freigesetzte Kohlendioxid vor Ort zur Förderung von Erdöl genutzt werden. Zweckmäßigerweise ist die Zuführleitung für das Kohlendioxid dem Kopf des Desorbers angeschlossen.

In einer besonders vorteilhaften Ausgestaltung ist die Abgasleitung wärmetechnisch mit einem Dampferzeuger verbunden. Der Dampferzeuger ist zweckmäßigerweise in einen Dampfkreislauf geschaltet. Der Dampfkreislauf, auch als Wasser-Dampf-Kreislauf bezeichnet, dient der Abfuhr von bei der Verbrennung entstehender Wärme. Das heiße Verbrennungsabgas wird hierbei am Dampferzeuger vorbeigeführt und erhitzt dabei im Dampfkreislauf zirkulierendes Wasser unter Entstehung von Dampf. Das Abgas selbst kühlt ab und kann dann zur Abtrennung des im Abgas enthaltenen Kohlendioxids der Abscheidevorrichtung zugeführt werden.

Zur Nutzung des entstehenden Dampfes ist es insbesondere von Vorteil, wenn der Dampferzeuger strömungstechnisch mit einer Dampfturbine verbunden ist. Mit anderen Worten ist die Dampfturbine in den Dampfkreislauf integriert. Da bei der Verbrennung des Abgases mehr Wärme entsteht, als für den Produktion von Dampf, insbesondere für die Produktion von Heizdampf für einen Reboiler, originär notwendig ist, kann der Dampferzeuger vorzugsweise so ausgelegt sein, dass er sich zur Erzeugung eines höherwertigen Dampfes hohen Druckes eignet, der dann in der Dampfturbine entspannt und zur Erzeugung elektrischer Leistung genutzt werden kann.

Zur Erzeugung der elektrischen Leistung ist der Dampfturbine zweckmäßigerweise ein Generator angeschlossen. Die elektrische Leistung kann dann zur Deckung des elektrischen Eigenbedarfs der Abscheidevorrichtung genutzt werden. Alternativ kann sie zur Verdichtung des gewonnenen Kohlendioxids verwendet oder in das allgemeine elektrische Verbrauchsnetz eingespeist werden. Erfindungsgemäß ist es von Vorteil, wenn die Dampfturbine in dem Dampfkreislauf wärmetechnisch mit der Abscheidevorrichtung verbunden ist. Der in der Dampfturbine auf ein vorgegebenes Druck- und Temperaturniveau entspannte Dampf kann so zur Unterstützung des Desorptionsprozesses genutzt werden. Hierzu ist die Dampfturbine zweckmäßigerweise als eine Gegendruckturbine ausgebildet. Alternative Ausgestaltungen der Dampfturbine schließen beispielsweise gängige Kondensationsturbinen in Kombination mit einer entsprechenden Heizdampfentnahme an der Dampfturbine oder am Dampferzeuger mit ein.

In einer bevorzugten Ausgestaltung der wärmetechnischen Verbindung der Dampfturbine mit der Abscheidevorrichtung im Dampfkreislauf ist der in der Dampfturbine entspannte Dampf über eine Dampfleitung des Dampfkreislaufes einem Reboiler zugeführt. Der Reboiler, der zweckmäßigerweise dem Desorber der Abscheidevorrichtung angeschlossen ist, fungiert hierbei als ein Kondensator für den Dampfkreislauf. Innerhalb des Reboilers wird der Dampf durch einen Wärmeaustauscher mit aus dem Desorber entnommenen Waschmedium geführt und kondensiert. Der kondensierte Dampf kann dann über eine strömungstechnisch mit der Dampfleitung verbundene Kondensatleitung des Dampfkreislaufes wieder dem Dampferzeuger zugeführt werden und dort erneut zur Wärmeabfuhr aus dem Verbrennungsabgas und gleichzeitig zum Betrieb der Dampfturbine genutzt werden.

Zweckmäßigerweise ist die Abgasleitung über eine Abführleitung strömungstechnisch mit einer Zuführleitung des Absorbers der Abscheidevorrichtung verbunden. So kann das im Verbrennungsabgas enthaltene Kohlendioxid nach der Abkühlung durch den Dampferzeuger durch einen Absorptions-Desorptionsprozess innerhalb der Abscheidevorrichtung aus dem Abgas entfernt werden und anschließend der Erdölförderung zugeführt werden. Zweckmäßigerweise wird hierbei ein erster Teilstrom von 50% bis weniger als 100% des gesamten Verbrennungsabgases dem Absorber zugeführt.

Besonders bevorzugt ist die Abgasleitung über eine Rückführleitung strömungstechnisch mit dem Brenner verbunden. Über die strömungstechnische Verbindung wird ein Teilstrom des Abgases nach dem Passieren des Dampferzeugers erneut dem Brenner zugeführt. Die Rückführung erfolgt hierbei vorzugsweise über einen in die Luftzufuhrleitung geschalteten Gasmischer und ermöglicht eine Rezirkulation des Verbrennungsabgases um den Dampferzeuger. Eine solche Rezirkulation ermöglicht die gezielte Einstellung der Konzentration des Kohlendioxids, die andernfalls nur über den Luftüberschuss bei der Verbrennung, also über das Verhältnis der tatsächlichen Luftmenge zu der für eine stöchiometrische Verbrennung benötigten Luftmenge, eingestellt werden könnte. Die gewünschte hohe Kohlendioxidkonzentration ließe sich hierbei nur durch einen geringen Luftüberschuss sicherstellen. Bei einem geringen Luftüberschuss sind jedoch zur Gewährleistung einer stöchiometrischen Verbrennung hohe Verbrennungstemperaturen notwendig. Für entsprechende Verbrennungstemperaturen sind allerdings die benötigten Heißgasteile jedoch nur zu sehr hohen Kosten verfügbar und bedürfen einer aufwändigen Kühlung. Zusätzlich steigt bei hohen Verbrennungstemperaturen die Konzentration von Stickoxiden im Abgas an.

Dank der Rezirkulation kann auf einfache Bauteile zurückgegriffen werden und aufgrund der geringeren Verbrennungstemperatur auch eine unerwünschte Zunahme an schädlichen Emissionen von Stickoxiden und Kohlenmonoxid bei der Verbrennung verhindert werden. Mit anderen Worten kann durch die Abgasrezirkulation die Abgastemperatur bei gleichzeitig effektiver Erhöhung der Kohlendioxidkonzentration im Verbrennungsabgas auf einem technisch beherrschbaren Niveau gehalten werden.

Der Anteil des Teilstroms, der über die Rückführleitung wieder zur Verbrennung des einströmenden gasförmigen Nebenproduktes, also des Brenngases genutzt wird, liegt hierbei vorzugsweise in einem Bereich von mehr als 0% bis zu 50% des gesamten Verbrennungsabgases.

Weiter von Vorteil ist es, wenn in die Luftzufuhrleitung ein Wärmetauscher zur Vorwärmung der Verbrennungsluft geschaltet ist. Hierzu wird der erste Teilstrom des erhitzen Abgases nach dem Passieren des Dampferzeugers über den Wärmtauscher geleitet. Der Teilstrom und die Verbrennungsluft werden hier im Wärmetausch geführt, wobei die Verbrennungsluft die Abwärme des Abgases aufnimmt und vorgewärmt wird. Der der Abscheidevorrichtung zugeführte erste Abgasteilstrom wird dabei vorzugsweise auf die im Absorber notwendige Absorptionstemperatur vorgekühlt.

Bevorzugt ist als Waschmedium zur Abtrennung des Kohlendioxids aus dem Abgas eine Aminosäuresalzlösung eingesetzt. Eine wässrige Aminosäuresalzlösung, und insbesondere eine kaliumhaltige wässrige Aminosäuresalzlösung ist hierbei zweckmäßig. Der Einsatz insbesondere einer wässrigen Aminosäuresalzlösung eignet sich hierbei insbesondere, da ein Aminosäuresalz einen vernachlässigbar geringen Dampfdruck hat und auch bei hohen Temperaturen nicht verdampft. Hierdurch werden insbesondere unerwünschte Emissionen in die Atmosphäre vermieden und zusätzlich eine Verringerung der Konzentration der Aktivkomponente des Waschmediums verhindert.

Die zweite Aufgabe der Erfindung wird erfindungsgemäß gelöst durch ein Verfahren zur Nutzung von bei der Verbrennung eines insbesondere gasförmigen Nebenproduktes entstehendem Kohlendioxid, wobei ein bei einer Brennstoffförderung aus einer Förderstelle freiwerdendes Nebenprodukt einer Aufbereitungseinheit zugeführt wird, wobei in der Aufbereitungseinheit das Nebenprodukt unter Zufuhr von Luft verbrannt wird, wobei das bei der Verbrennung entstehende kohlendioxidhaltige Abgas einer Abscheidevorrichtung für Kohlendioxid zugeführt wird, und wobei das in der Abscheidevorrichtung aus dem Abgas abgetrennte Kohlendioxid zur erneuten Brennstoffförderung der Förderstelle zugeführt wird.

Das Kohlendioxid, welches mittels eines solchen Verfahrens gewonnen wird, kann auf einfache und kostengünstige Weise zur Erdölförderung genutzt werden. Durch die gezielte Verwertung der bislang ungenutzten, bei der Erdölförderung anfallenden Nebenprodukte kann zusätzlich ein Beitrag zum Klimaschutz durch die Verhinderung des in die Atmosphäre emittierten Kohlendioxids erreicht werden.

Weitere vorteilhafte Ausführungsvarianten ergeben sich aus den auf das Verfahren gerichteten Unteransprüchen. Die für die Vorrichtung und deren vorteilhafte Weiterbildungen genannten Vorteile können sinngemäß auf das Verfahren und dessen Weiterbildungen übertragen werden.

Im Folgenden wird ein Ausführungsbeispiel der Erfindung anhand einer Zeichnung näher erläutert.

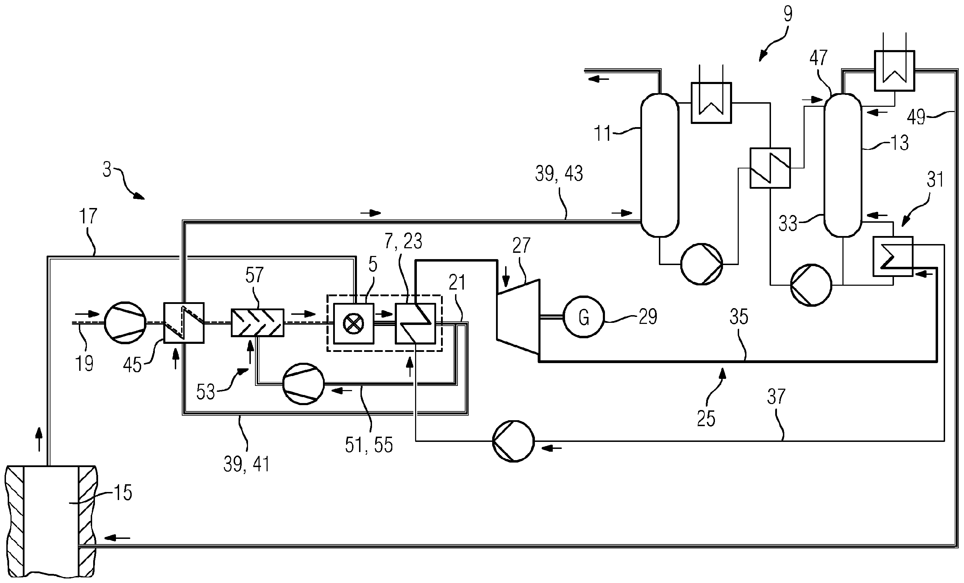

FIG 1 zeigt eine Vorrichtung 1 zur Nutzung von bei der Verbrennung eines insbesondere gasförmigen Nebenproduktes der Erdölförderung entstehendem Kohlendioxid. Die Vorrichtung 1 umfasst eine Aufbereitungseinheit 3 mit einem Brenner 5 und einem Dampferzeuger 7. Weiterhin umfasst die Vorrichtung 1 eine der Aufbereitungseinheit 3 strömungstechnisch angeschlossene Abscheidevorrichtung 9 für Kohlendioxid. In der Abscheidevorrichtung 9 wird das im Rahmen der Verbrennung entstandene Kohlendioxid mittels eines Waschmediums aus dem Abgas abgetrennt. Hierzu umfasst die Abscheidevorrichtung 9 einen Absorber 11 und einen mit diesem strömungstechnisch gekoppelten Desorber 13.

Die Vorrichtung 1 erlaubt eine Vor-Ort-Produktion und anschließende Nutzung von Kohlendioxid bei der tertiären Erdölförderung. Bei der tertiären Erdölförderung wird das zu fördernde Erdöl durch ein Einpressen von Kohlendioxid in entsprechende Bohrungen einer Förderstelle 15 gewonnen. Zusätzlich zum Erdöl werden hierbei technisch nicht weiter verwertbare Brenngase, also gasförmige Nebenprodukte freigesetzt. Anstatt diese Brenngase wie bislang üblich abzufackeln, wird der Brenngasstrom über eine Brennstoffzufuhrleitung 17 dem Brenner 5 der Aufbereitungseinheit 3 zugeführt. Im Brenner 5 wird das Brenngas atmosphärisch unter Luftzufuhr verbrannt. Die Luft wird dem Brenner 5 über eine Luftzuführleitung 19 zugeführt.

Der Brenner 5 ist über eine ihm angeschlossene Abgasleitung 21 wärmetechnisch mit dem Dampferzeuger 7 gekoppelt. Das bei der Verbrennung entstehende Abgas wird über einen Wärmetauscher 23 des Dampferzeugers 7 geführt, über den die bei der Verbrennung entstehende Abwärme abgeführt werden kann.
Der Dampferzeuger 7 ist in einen Dampfkreislauf 25, bzw. Wasser-Dampf-Kreislauf geschaltet, in dem Wasser bzw. Dampf zirkulieren. Das zirkulierende Wasser wird im Dampferzeuger 7 unter Entstehung von Dampf erhitzt. Um den Dampf zu nutzen, ist der Dampferzeuger 7 strömungstechnisch mit einer Dampfturbine 27 verbunden. Die Dampfturbine 27 wird mittels des im Dampferzeuger 7 erzeugten Dampfes betrieben. Der Dampf wird innerhalb der Dampfturbine 27 entspannt und betreibt einen Generator 29, der elektrische Leistung bereitstellt, die zur Abdeckung des elektrischen Eigenbedarfs der Abscheidevorrichtung 9 genutzt wird.

Die zur Entspannung des Dampfes eingesetzte Dampfturbine 27 ist vorliegend als eine Gegendruckturbine ausgebildet. Die Gegendruckturbine 27 entspannt den Dampf auf ein für die Abtrennung des Kohlendioxids in der Abscheidevorrichtung 9 benötigtes Druck- und Temperaturniveau. Die Dampfturbine 27 ist im Dampfkreislauf 25 wärmetechnisch mit einem Reboiler 31 verbunden, der als Sumpfverdampfer am Boden 33 des Desorbers 13 angeordnet ist. Der entspannte Dampf strömt von der Dampfturbine 27 über eine Dampfleitung 35 des Dampfkreislaufs 25 zum Reboiler 31. Der Reboiler 31 fungiert hierbei als Kondensator für den Dampfkreislauf 25. Der aus der Dampfturbine 27 austretende Dampf gibt seine Wärme an das im Reboiler 31 zirkulierende Waschmedium ab, und wird dabei selbst kondensiert. Der kondensierte Dampf wird über eine mit der Dampfleitung 35 strömungstechnisch verbundene Kondensatleitung 37 wieder dem Dampferzeuger 7 zugeführt und nimmt dort - unter Kühlung des Verbrennungsabgases und Bildung von neuem Dampf - die im Dampferzeuger 7 bereitgestellte Wärme auf. Die im Reboiler 31 abgeführte Wärme wird zur Desorption des Kohlendioxids aus dem Waschmedium im Desorber 13 genutzt.

Um eine Abscheidung des Kohlendioxids aus dem Abgas zu erreichen, ist die Aufbereitungseinheit 3 über die Abgasleitung 21 strömungstechnisch mit der Abscheidevorrichtung 9 gekoppelt. Ein erster Teilstrom 39 des Abgases wird hierbei über die Verbindung einer Abführleitung 41 mit einer Zuführleitung 43 des Absorbers 11 diesem zugeführt. Dabei passiert der Abgasteilstrom 39 einen Wärmetauscher 45, der den Abgasteilstrom 39 vor dem Eintritt in den Absorber 11 weiter vorkühlt. Gleichzeitig wird so die Verbrennungsluft in der Luftzufuhrleitung 19 vor dem Eintritt in den Brenner 5 vorwärmt.

Innerhalb des Absorbers 11 wird der erste Teilstrom 39 des Abgases, vorliegend 50% des gesamten Abgasstromes, mit dem Waschmedium in Kontakt gebracht und das im Abgas enthaltene Kohlendioxid in dem Waschmedium absorbiert. Als Waschmedium ist vorliegend eine wässrige kaliumhaltige Aminosäuresalzlösung eingesetzt. Das beladene Waschmedium strömt zur Freisetzung des Kohlendioxids in den Desorber 13, wo das Kohlendioxid thermisch desorbiert wird. Das Kohlendioxid wird am Kopf 47 des Desorbers entnommen, gegebenenfalls verdichtet und schließlich über eine Zuführleitung 49 zur erneuten Brennstoffförderung der Förderstelle 15 zugeführt.

Ein zweiter Teilstrom 51 des Abgases, vorliegend 50% des gesamten Abgasstromes, wird nach dem Passieren des Dampferzeugers 7 und nach entsprechender Vorkühlung im Rahmen einer Abgasrezirkulation 53 über eine Rückführleitung 55 in den Brenner 7 zurückgeführt. Bei der Abgasrezirkulation 53 wird der zweite Teilstrom 51 vor dem Eintritt in den Brenner noch einem Gasmischer 57 zugeführt, in welchen auch die Verbrennungsluft über die Zuführleitung einströmt.

Durch eine solche Abgasrezirkulation 53 wird eine ausreichend hohe Kohlendioxid-Konzentration im Abgas sichergestellt, die durch eine alleinige Verbrennung des Abgases mit Luft nur über das Verhältnis der tatsächlichen Luftmenge zu der für eine stöchiometrische Verbrennung benötigten Luftmenge eingestellt werden könnte. Weiterhin lässt sich dank der Abgasrezirkulation 53 die Abgastemperatur auf einem technisch beherrschbaren Niveau halten.

## Patentansprüche

1. Vorrichtung (1) zur Nutzung von bei der Verbrennung eines insbesondere gasförmigen Nebenproduktes entstehendem Kohlendioxid, umfassend eine einer Förderstelle (15) für fossilen Brennstoff anschließbare Aufbereitungseinheit (3) mit einem Brenner (5) zur Verbrennung eines bei der Brennstoffförderung freiwerdenden Nebenproduktes und mit einer mit dem Brenner (5) verbundenen Abgasleitung (21), sowie umfassend eine der Aufbereitungseinheit (3) über die Abgasleitung (21) strömungstechnisch angeschlossene Abscheidevorrichtung (9) für Kohlendioxid, wobei die Abscheidevorrichtung (9) zur erneuten Brennstoffförderung über eine Zuführleitung (49) für Kohlendioxid strömungstechnisch mit der Förderstelle (15) verbindbar ist, wobei die Abgasleitung (21) wärmetechnisch mit einem Dampferzeuger (7) verbunden ist, wobei der Dampferzeuger (7) strömungstechnisch mit einer Dampfturbine (27) verbunden ist, **dadurch gekennzeichnet, dass** ein Dampfkreislauf (25) der Dampfturbine (27) wärmetechnisch mit der Abscheidevorrichtung (9) verbunden ist.

2. Vorrichtung (1) nach Anspruch 1,
wobei dem Brenner (5) der Aufbereitungseinheit (3) eine Brennstoffzufuhrleitung (17) zur Zufuhr des Nebenproduktes angeschlossen ist.

3. Vorrichtung (1) nach Anspruch 1 oder 2,
wobei dem Brenner (5) der Aufbereitungseinheit (3) eine Luftzufuhrleitung (19) zur Zufuhr von Verbrennungsluft angeschlossen ist.

4. Vorrichtung (1) nach einem der vorhergehenden Ansprüche,
wobei die Abscheidevorrichtung (9) einen Absorber (11) zur Abtrennung des Kohlendioxids aus dem Abgas mittels eines Waschmediums, sowie einen strömungstechnisch mit dem Absorber (11) verbundenen Desorber (13) zur Freisetzung des Kohlendioxids aus dem Waschmedium umfasst.

5. Vorrichtung (1) nach Anspruch 4,
wobei der Desorber (13) der Abscheidevorrichtung (9) über die Zuführleitung (49) für Kohlendioxid strömungstechnisch mit der Förderstelle (15) verbunden ist.

6. Vorrichtung (1) nach einem der vorhergehenden Ansprüche,
wobei der Dampfturbine (27) ein Generator (29) angeschlossen ist.

7. Vorrichtung (1) nach einem der vorhergehenden Ansprüche,
wobei die Dampfturbine (27) als eine Gegendruckturbine ausgebildet ist.

8. Vorrichtung (1) nach einem der Ansprüche 4 bis 7,
wobei die Abgasleitung (21) über eine Abführleitung (41) strömungstechnisch mit einer Zuführleitung (43) des Absorbers (11) der Abscheidevorrichtung (9) verbunden ist.

9. Vorrichtung (1) nach einem der vorhergehenden Ansprüche,
wobei die Abgasleitung (21) über eine Rückführleitung (55) strömungstechnisch mit dem Brenner (5) der Aufbereitungseinheit (3) verbunden ist.

10. Vorrichtung (1) nach einem der Ansprüche 3 bis 9,
wobei in die Luftzufuhrleitung (19) ein Wärmetauscher (23) zur Vorwärmung der Verbrennungsluft geschaltet ist.

11. Vorrichtung (1) nach einem der Ansprüche 4 bis 10,
wobei als Waschmedium zur Abtrennung des Kohlendioxids aus dem Abgas eine Aminosäuresalzlösung eingesetzt ist.

12. Verfahren zur Nutzung von bei der Verbrennung eines insbesondere gasförmigen Nebenproduktes entstehendem Kohlendioxid,
- wobei ein bei einer Brennstoffförderung aus einer Förderstelle (15) freiwerdendes Nebenprodukt einer Aufbereitungseinheit (3) zugeführt wird,
- wobei das Nebenprodukt in der Aufbereitungseinheit (3)unter Zufuhr von Luft verbrannt wird,
- wobei das bei der Verbrennung entstehende kohlendioxidhaltige Abgas einer Abscheidevorrichtung (9) für Kohlendioxid zugeführt wird, **dadurch gekennzeichnet, dass** das in der Abscheidevorrichtung (9) aus dem Abgas abgetrennte Kohlendioxid zur erneuten Brennstoffförderung der Förderstelle (15) zugeführt wird wobei die bei der Verbrennung entstehende Wärme über einen der Verbrennung nachgeschalteten Dampferzeuger (7) abgeführt wird, und wobei im Dampferzeuger (7) durch die bei der Verbrennung entstehende Wärme Dampf gebildet wird, wobei der im Dampferzeuger (7) gebildete Dampf in einer Dampfturbine (27) entspannt wird, und der in der Dampfturbine entspannte Dampf zur Abscheidung des Kohlendioxids aus dem Abgas in der Abscheidevorrichtung (9) genutzt wird.

13. Verfahren nach Anspruch 12,
wobei das im Abgas enthaltene Kohlendioxid in einem Absorber (11) der Abscheidevorrichtung (9) mittels eines Waschmediums aus dem Abgas abgetrennt wird, und wobei das Kohlendioxid aus dem Waschmedium in einem strömungstechnisch mit dem Absorber verbundenen Desorber (13) der Abscheidevorrichtung (9) freigesetzt wird.

14. Verfahren nach Anspruch 12 oder 13,
wobei das in der Abscheidevorrichtung (9) aus dem Abgas abgetrennte Kohlendioxid vom Desorber (13) ausgehend der Förderstelle (15) zugeführt wird.

15. Verfahren nach einem der Ansprüche 12 bis 14,
wobei mittels der Dampfturbine (27) ein Generator (29) betrieben wird.

16. Verfahren nach Anspruch 12 bis 15,
wobei als Dampfturbine (27) eine Gegendruckturbine eingesetzt wird.

17. Verfahren nach einem der Ansprüche 12 bis 16,
wobei ein erster Teilstrom (39) des Abgases der Verbrennung über eine Abführleitung (41) dem Absorber (11) der Abscheidevorrichtung (9) zugeführt wird.

18. Verfahren nach einem der Ansprüche 12 bis 17,
wobei ein zweiter Teilstrom (51) des Abgases der Verbrennung über eine Rückführleitung (55) der Verbrennung des Nebenproduktes zugeführt wird.

19. Verfahren nach Anspruch 12 bis 18,
wobei der erste Teilstrom (39) des Abgases vor dem Eintritt in den Absorber (11) die Verbrennungsluft vorwärmt.

20. Verfahren nach einem der Ansprüche 12 bis 19,
wobei als Waschmedium zur Abtrennung des Kohlendioxids aus dem Abgas eine Aminosäuresalzlösung eingesetzt wird.

## Claims

1. Device (1) for using carbon dioxide formed in the combustion of particularly a gaseous by-product, comprising a treatment unit (3) which is connectable to a recovery site (15) for fossil fuel and having a burner (5) for combustion of a by-product that is released in the fuel recovery and having an exhaust gas line (21) that is connected to the burner (5), and also comprising a carbon dioxide separation device (9) that is flow-connected via the exhaust gas line (21) to the treatment unit (3), wherein the separation device (9) is flow-connectable to the recovery site (15) for renewed fuel recovery via a feed line (49) for carbon dioxide, wherein the exhaust gas line (21) is heat-connected to a steam generator (7), wherein the steam generator (7) is flow-connected to a steam turbine (27), **characterized in that** a steam circuit (25) of the steam turbine (27) is heat-connected to the separation device (9).

2. Device (1) according to Claim 1, wherein a fuel feed line (17) for feeding the by-product is connected to the burner (5) of the treatment unit (3).

3. Device (1) according to Claim 1 or 2, wherein an air feed line (19) for supplying combustion air is connected to the burner (5) of the treatment unit (3).

4. Device (1) according to any one of the preceding claims, wherein the separation device (9) comprises an absorber (11) for separating off the carbon dioxide from the exhaust gas by means of a scrubbing medium, and also a desorber (13) that is flow-connected to the absorber (11) for releasing the carbon dioxide from the scrubbing medium.

5. Device (1) according to Claim 4, wherein the desorber (13) of the separation device (9) is flow-connected to the recovery site (15) via the feed line (49) for carbon dioxide.

6. Device (1) according to any one of the preceding claims, wherein a generator (29) is connected to the steam turbine (27) .

7. Device (1) according to any one of the preceding claims, wherein the steam turbine (27) is constructed as a counterpressure turbine.

8. Device (1) according to any one of Claims 4 to 7, wherein the exhaust gas line (21) is flow-connected to a feed line (43) of the absorber (11) of the separation device (9) via a withdrawal line (41).

9. Device (1) according to any one of the preceding claims, wherein the exhaust gas line (21) is flow-connected to the burner (5) of the treatment unit (3) via a return line (55).

10. Device (1) according to any one of Claims 3 to 9, wherein a heat exchanger (23) for preheating the combustion air is connected into the air feed line (19).

11. Device (1) according to any one of Claims 4 to 10, wherein the scrubbing medium used for separating off the carbon dioxide from the exhaust gas is an amino acid salt solution.

12. Method for using carbon dioxide formed in the combustion of particularly a gaseous by-product,
- wherein a by-product released from a recovery site (15) in a fuel recovery is fed to a treatment unit (3),
- wherein the by-product is burnt with feed of air in the treatment unit (3),
- wherein the carbon dioxide-containing exhaust gas formed in the combustion is fed to a carbon dioxide separation device (9), **characterized in that** the carbon dioxide that is separated off from the exhaust gas in the separation device (9) is fed to the recovery site (15) for renewed fuel recovery, wherein the heat that is formed in the combustion is removed via a steam generator (7) that is connected downstream of the combustion, and wherein steam is formed in the steam generator (7) by the heat formed in the combustion, wherein the steam formed in the steam generator (7) is expanded in a steam turbine (27), and the steam expanded in the steam turbine is used for separating off the carbon dioxide from the exhaust gas in the separation device (9).

13. Method according to Claim 12, wherein the carbon dioxide present in the exhaust gas is separated off from the exhaust gas by means of a scrubbing medium in an absorber (11) of the separation device (9), and wherein the carbon dioxide is released from the scrubbing medium in a desorber (13) of the separation device (9) that is flow-connected to the absorber.

14. Method according to Claim 12 or 13, wherein the carbon dioxide that is separated off from the exhaust gas in the separation device (9) is fed to the recovery site (15) proceeding from the desorber (13).

15. Method according to any one of Claims 12 to 14, wherein a generator (29) is operated by means of the steam turbine (27).

16. Method according to Claim 12 to 15, wherein a counterpressure turbine is used as steam turbine (27).

17. Method according to any one of Claims 12 to 16, wherein a first substream (39) of the exhaust gas of the combustion is fed via a withdrawal line (41) to the absorber (11) of the separation device (9).

18. Method according to any one of Claims 12 to 17, wherein a second substream (51) of the exhaust gas of the combustion is fed via a return line (55) to the combustion of the by-product.

19. Method according to Claim 12 to 18, wherein the first substream (39) of the exhaust gas preheats the combustion air before entry into the absorber (11).

20. Method according to any one of Claims 12 to 19, wherein the scrubbing medium used for separating off the carbon dioxide from the exhaust gas is an amino acid salt solution.

## Revendications

1. Dispositif (1) pour utiliser du dioxyde de carbone se formant à la combustion d'un sous-produit, notamment gazeux, comprenant une unité (3) de traitement, pouvant être raccordée à un point (15) d'extraction de combustible fossile et ayant un brûleur (5) pour brûler un sous produit se dégageant lors de l'extraction du combustible, et un conduit (21) d'évacuation des gaz communiquant avec le brûleur (5) ainsi que comprenant un dispositif (9) de séparation du dioxyde de carbone, raccordé fluidiquement à l'unité (3) de traitement par le conduit (21) pour des gaz perdus, le dispositif (9) de séparation pouvant, pour l'extraction renouvelée de combustible, communiquer fluidiquement avec le point (15) d'extraction par un conduit (49) d'apport,
dans lequel le conduit (21) pour les gaz perdus est relié en technique de chaleur avec un générateur (7) de vapeur, le générateur (7) de vapeur communiquant fluidiquement avec une turbine (27) à vapeur, **caractérisé en ce qu'**un circuit (25) vapeur de la turbine (27) à vapeur est relié en technique de chaleur au dispositif (9) de séparation.

2. Dispositif (1) suivant la revendication 1,
dans lequel le brûleur (5) de l'unité (3) de traitement est, pour l'apport du sous-produit, raccordé à un conduit (17) d'apport de combustible.

3. Dispositif (1) suivant la revendication 1 ou 2,
dans lequel, au brûleur (5) de l'unité (3) de traitement, est, pour l'apport d'air de combustion, raccordé un conduit (19) d'apport d'air.

4. Dispositif (1) suivant l'une des revendications précédentes,
dans lequel le dispositif (9) de séparation comprend un absorbeur (11) pour la séparation du dioxyde de carbone des gaz perdus, au moyen d'un milieu de lavage, ainsi qu'un désorbeur (13) relié fluidiquement à l'absorbeur (11) pour libérer le dioxyde de carbone du milieu de lavage.

5. Dispositif (1) suivant la revendication 4,
dans lequel le désorbeur (13) du dispositif (9) de séparation est relié fluidiquement au point (15) d'extraction par le conduit (49) d'apport du dioxyde de carbone.

6. Dispositif (1) suivant l'une des revendications précédentes,
dans lequel une génératrice (29) est raccordée à la turbine (27) à vapeur.

7. Dispositif (1) suivant l'une des revendications précédentes,
dans lequel la turbine (27) à vapeur est constituée en turbine à contre pression.

8. Dispositif (1) suivant l'une des revendications 4 à 7, dans lequel le conduit (21) pour les gaz perdus communique fluidiquement, par un conduit (41) d'évacuation, avec un conduit (43) d'apport de l'absorbeur (11) du dispositif (9) de séparation.

9. Dispositif (1) suivant l'une des revendications précédentes,
dans lequel le conduit (21) pour les gaz perdus communique fluidiquement, par un conduit (55) de recyclage, avec le brûleur (5) de l'unité (3) de traitement.

10. Dispositif (1) suivant l'une des revendications 3 à 9, dans lequel un échangeur de chaleur (23), pour préchauffer l'air de combustion, est monté dans le conduit (19) d'apport d'air.

11. Dispositif (1) suivant l'une des revendications 4 à 10, dans lequel une solution de sels d'acides aminés est utilisée, comme milieu de lavage, pour séparer le dioxyde de carbone des gaz perdus.

12. Procédé d'utilisation du dioxyde de carbone formé à la combustion d'un sous-produit, notamment gazeux,
- dans lequel on envoie, à une unité (3) de traitement, un sous-produit se libérant d'un point (15) d'extraction lors d'une extraction de combustible,
- dans lequel on brûle le sous-produit dans l'unité (3) de traitement par un apport d'air,
- dans lequel on envoie les gaz perdus, contenant du dioxyde de carbone produit à la combustion, à un dispositif (9) de séparation du dioxyde de carbone, **caractérisé en ce que** on envoie le dioxyde de carbone séparé des gaz perdus dans le dispositif (9) de séparation à l'extraction renouvelée de combustible du point (15) d'extraction,
dans lequel on évacue la chaleur produite à la combustion par un générateur de vapeur (7) monté en aval de la combustion et dans lequel on forme dans le générateur de vapeur (7) de la vapeur par la chaleur produite par la combustion, dans lequel on détend, dans une turbine (27) à vapeur, la chaleur formée dans le générateur de vapeur (7) et on utilise la vapeur détendue dans la turbine à vapeur pour séparer le dioxyde de carbone des gaz perdus dans le dispositif (9) de séparation.

13. Procédé suivant la revendication 12,
dans lequel on sépare des gaz perdus au moyen d'un milieu de lavage, le dioxyde de carbone contenu dans les gaz perdus, dans un absorbeur (11) du dispositif (9) de séparation, et dans lequel on libère le dioxyde de carbone du milieu de lavage dans un désorbeur (13), relié physiquement à l'absorbeur, du dispositif (9) de séparation.

14. Procédé suivant la revendication 12 ou 13, dans lequel on envoie, à partir du désorbeur (13) au point (15) d'extraction, le dioxyde de carbone séparé des gaz perdus dans le dispositif (9) de séparation.

15. procédé suivant l'une des revendications 12 à 14,
dans lequel on fait fonctionner une génératrice (29) au moyen de la turbine (27) à vapeur.

16. Procédé suivant la revendication 12 à 15,
dans lequel on utilise une turbine à contre pression, comme turbine (27) à vapeur.

17. Procédé suivant l'une des revendications 12 à 16,
dans lequel on envoie un premier courant (39) partiel du gaz perdu de la combustion par un conduit (41) d'évacuation à l'absorbeur (11) du dispositif (9) de séparation.

18. Procédé suivant l'une des revendications 12 à 17,
dans lequel on envoie un deuxième courant (51) partiel du gaz perdu de la combustion par un conduit (55) de recyclage à la combustion du sous-produit.

19. Procédé suivant la revendication 12 à 18,
dans lequel le premier courant (39) partiel des gaz perdus préchauffe l'air de combustion avant l'entrée dans l'absorbeur (11).

20. Procédé suivant l'une des revendications 12 à 19,
dans lequel on utilise une solution de sels d'acides aminés, comme milieu de lavage pour séparer le dioxyde de carbone des gaz perdus.
